# EUROPÄISCHE PATENTANMELDUNG

(11) **EP 4 737 115 A1**
(43) Veröffentlichungstag der Anmeldung: **06.05.2026**
(21) Anmeldenummer: 25211659.5
(22) Anmeldetag: 28.10.2025
(51) Int. Cl.: B32B 15/04, B23K 10/02, B23K 15/00, B23K 26/144, B23K 26/342, F16C 33/12

(54) **VERFAHREN ZUR BESCHICHTUNG DER OBERFLÄCHE ODER EINES OBERFLÄCHENABSCHNITTS EINES BAUTEILS**

(30) Priorität: 31.10.2024 DE 102024131851
(71) Anmelder: Fraunhofer-Gesellschaft zur Förderung der angewandten Forschung e.V., 80686 München (DE)
(72) Erfinder: Hama-Saleh, Rebar, 52074 Aachen (DE); Dahmen, Marius, 52074 Aachen (DE); Glushych, Viktor, 52074 Aachen (DE); Fink, Samuel, 52074 Aachen (DE); Weisser, Eduard, 52074 Aachen (DE); Vedder, Christian, 52074 Aachen (DE); Schopphoven, Thomas, 52074 Aachen (DE)
(74) Vertreter: Gagel, Roland

(57) **Zusammenfassung**

Bei einem Verfahren zur Beschichtung der Oberfläche eines Bauteils (1) wird die Oberfläche des Bauteils (1) mit wenigstens einer ersten Schicht (2) aus einem ersten Werkstoff mit einem auf Energieeintrag zur Erwärmung des ersten Werkstoffs basierenden Verfahren beschichtet und die erste Schicht (2) mit einer zweiten Schicht (3) aus einem zweiten Werkstoff beschichtet, der sich vom ersten Werkstoff unterscheidet. Die Beschichtung mit der zweiten Schicht (3) erfolgt dabei wenigstens zum Teil unter Ausnutzung von Restwärme aus der ersten Schicht (2) und/oder wird dadurch positiv beeinflusst, die aus der Beschichtung mit der ersten Schicht (2) resultiert. Das Verfahren ermöglicht eine zeitsparende und kostengünstige Beschichtung beispielsweise von metallischen Bauteilen mit polymeren Gleitschichten.

## Beschreibung

### Technisches Anwendungsgebiet

Die vorliegende Erfindung betrifft ein Verfahren zur Beschichtung der Oberfläche oder eines Oberflächenabschnitts eines Bauteils, bei dem die Oberfläche oder der Oberflächenabschnitt des Bauteils mit wenigstens einer ersten Schicht aus einem ersten Werkstoff mit einem auf Energieeintrag zur Erwärmung des ersten Werkstoffs basierenden Verfahren beschichtet und die erste Schicht mit einer zweiten Schicht aus einem zweiten Werkstoff beschichtet wird, der sich vom ersten Werkstoff unterscheidet.

Die Beschichtung von metallischen Bauteilen mit verschleißarmen nicht-metallischen Beschichtungen kann eine Herausforderung hinsichtlich des für die Beschichtung erforderlichen Zeit- und Energieaufwands darstellen. So finden beispielsweise reibmindernde Beschichtungen auf Basis des Hochleistungspolymers Polyetheretherketon (PEEK) konventionell Anwendung auf mechanisch beanspruchten Grenzflächen und werden mittels Ofenverfahren auf die zugrundeliegenden Stahlbauteile aufgebracht. Dazu wird das pulverförmige PEEK auf das Bauteil aufgetragen und anschließend im Ofen aufgeschmolzen. In der Folge wird das gesamte Bauteil für einige Minuten bis Stunden (in Abhängigkeit von der Bauteilgröße) auf eine Temperatur zwischen 380 und 420 °C aufgeheizt. Eine Beschichtung von hochvoluminösen Bauteilen wie bspw. Gleitlagern von Windkraftanlagen ist mit diesem Beschichtungsverfahren daher mit einem enormen Zeit- und Energieaufwand verbunden.

### Stand der Technik

Laser- oder plasmabasierte, additive Fertigungsverfahren mit Pulver- oder Drahtzufuhr, wie sie u.a. für die Modifikation oder die komplette Fertigung von Bauteilen und Bauteiloberflächen bekannt sind, eignen sich ebenfalls für die Oberflächenbeschichtung. Das Verfahrensprinzip für die Fertigung von Bauteilen basiert auf dem schichtweisen Aufbau einer Lage bzw. eines Volumenkörpers mit Hilfe einer Energiequelle. Der Zusatzwerkstoff wird als Pulver oder Draht dem Prozess zugeführt. Der Zusatzwerkstoff wird zusammen mit einer dünnen Randschicht des darunterliegenden Materials mittels Laserstrahlung aufgeschmolzen, so dass zwischen den Schichten eine schmelzmetallurgische Verbindung entsteht. Dabei treten lokal auf dem Bauteil hohe Temperaturen auf. Fertigungsverfahren, die dieses Prinzip nutzen sind beispielsweise LMD (Laser material Deposition), EHLA (Extremes Hochgeschwindigkeits-Laserauftragschweißen) oder PTA (Plasma-Transferred-Arc).

Das vom Fraunhofer ILT entwickelte EHLA-Verfahren wird bspw. zum Auftragen metallischer Beschichtungen auf rotationssymmetrischen Bauteilen mit sehr hohen Prozessgeschwindigkeiten von bis zu 500 m/min genutzt. Der Zusatzwerkstoff Pulver wird in einem Trägergasstrom durch eine Ringstrahl-Düse in den koaxial angeordneten Laserstrahl gefördert, schmilzt dort vollständig auf und wird dann auf das Substrat appliziert. Dabei wird das Verhältnis der vom Pulvergasstrahl absorbierten und zur Substratoberfläche transmittierten Laserstrahlung so eingestellt, dass sowohl eine hinreichende Erwärmung des Zusatzwerkstoffs als auch die Erzeugung eines minimalen Schmelzbades zur Ausbildung einer dichten Beschichtung ermöglicht wird.

Die Aufgabe der vorliegenden Erfindung besteht darin, ein Verfahren zur Beschichtung der Oberfläche oder eines Oberflächenabschnitts eines Bauteils anzugeben, dass eine zeitsparende und kostengünstige Beschichtung ermöglicht und sich insbesondere für die Applikation reibmindernder, verschleißarmer Beschichtungen auf metallischen Oberflächen eignet.

**Darstellung der Erfindung**
die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie dem Ausführungsbeispiel entnehmen.

Bei dem vorgeschlagenen Verfahren wird ein Schichtverbund aus zwei Schichten auf die Oberfläche oder den Oberflächenabschnitt aufgebracht. Hierzu wird die Oberfläche oder der Oberflächenabschnitt des Bauteils mit wenigstens einer ersten Schicht aus einem ersten Werkstoff mit einem auf Energieeintrag zur Erwärmung des ersten Werkstoffs basierenden Verfahren beschichtet. Die erste Schicht wird mit einer zweiten Schicht aus einem zweiten Werkstoff beschichtet, der sich vom ersten Werkstoff unterscheidet. Das Verfahren zeichnet sich dadurch aus, dass die Beschichtung mit der zweiten Schicht wenigstens zum Teil unter Ausnutzung von Restwärme aus der ersten Schicht erfolgt und/oder beeinflusst wird, die aus der Beschichtung mit der ersten Schicht resultiert.

In einer Verfahrensalternative kann auch die Oberfläche oder der Oberflächenabschnitt eines Bauteils, die bzw. der aus einem ersten Werkstoff besteht, unmittelbar vor der Beschichtung mit einem auf Energieeintrag zur Erwärmung des ersten Werkstoffs basierenden Verfahren unter Änderung von Werkstoff- und/oder Oberflächen-eigenschaften bearbeitet und dann mit einer Schicht aus einem zweiten Werkstoff beschichtet werden, der sich vom ersten Werkstoff unterscheidet. Die Beschichtung mit dem zweiten Werkstoff erfolgt wenigstens zum Teil unter Ausnutzung von Restwärme aus der Oberfläche oder dem Oberflächenabschnitt und/oder wird dadurch beeinflusst, die aus der Bearbeitung der Oberfläche oder des Oberflächenabschnitts unter Änderung der Werkstoff- und/oder Oberflächeneigenschaften resultiert. Die Temperatur wird hierbei nicht als Werkstoff- und/oder Oberflächeneigenschaft angesehen.

Bei dem Bauteil handelt es sich dabei jeweils vorzugsweise um ein metallisches Bauteil. Der erste Werkstoff sollte vorzugsweise einen höheren Schmelzpunkt aufweisen als der zweite Werkstoff.

Bei dem vorgeschlagenen Verfahren wird somit durch gezielte Ausnutzung eines vorgelagerten Bearbeitungsschrittes, bei dem ein Energieeintrag zur Erwärmung des ersten Werkstoffes erfolgt, die aus diesem Bearbeitungsschritt verbleibende Restwärme bei der flächigen Beschichtung mit der Schicht aus dem zweiten Werkstoff genutzt, um den für die Beschichtung mit dem zweiten Werkstoff erforderlichen Energieeintrag aus einer externen Quelle zu reduzieren, vorzugsweise bis auf Null, und/oder die Schichteigenschaften dieser Schicht positiv zu beeinflussen, bspw. die Rissfreiheit und/oder Haftung der Schicht zu verbessern. Die Beschichtung mit dem zweiten Werkstoff muss dazu in ausreichend kurzem zeitlichen Abstand zur Bearbeitung des jeweiligen Bereiches in dem vorgelagerten Bearbeitungsschritt erfolgen. Unter dem Restwärme ist hierbei zu verstehen, dass die erste Schicht oder die jeweilige Oberfläche bzw. der Oberflächenbereich noch eine Temperatur oberhalb der Umgebungstemperatur aufweist.

In einer bevorzugten Ausgestaltung werden die Parameter für die Erwärmung des ersten Werkstoffs und der obige zeitliche Zeitabstand so gewählt, dass die Beschichtung mit dem zweiten Werkstoff alleine durch Ausnutzung bzw. Zufuhr der Restwärme ohne zusätzlichen externen Wärmeeintrag erfolgt.

In einer vorteilhaften Ausbildung der vorgeschlagenen Verfahren werden für die Beschichtung mit der ersten Schicht oder die Bearbeitung der Oberfläche oder des Oberflächenabschnitts aus dem ersten Werkstoff ein erster Prozesskopf, der in einer Vorschubrichtung über die Oberfläche oder den Oberflächenabschnitt bewegt wird, und für die Beschichtung mit dem zweiten Werkstoff ein zweiter Prozesskopf eingesetzt, der in Vorschubrichtung unmittelbar hinter dem ersten Prozesskopf über die Oberfläche oder den Oberflächenabschnitt bewegt wird. Dadurch kann die Beschichtung mit dem zweiten Werkstoff - je nach Größe der zu beschichtenden Fläche - über einen Zeitraum gleichzeitig mit der Beschichtung mit dem ersten Werkstoff oder der Bearbeitung der Oberfläche oder des Oberflächenabschnitts aus dem ersten Werkstoff erfolgen. Auch ein Vorschub des Bauteils gegenüber ortsfesten Prozessköpfen ist natürlich in analoger Weise möglich.

Durch die vorgeschlagenen Verfahren wird durch Ausnutzung der Restwärme aus dem vorangehenden Prozess der energetische Aufwand für die Beschichtung reduziert. Weiterhin lässt sich das vorgeschlagene Verfahren aufgrund der zeitlich engen Abfolge von Beschichtung mit der ersten Schicht bzw. Bearbeitung der Oberfläche oder des Oberflächenabschnitts und Beschichtung mit der Schicht aus dem zweiten Schichtmaterial zeitsparend durchführen. Dies gilt insbesondere für eine bevorzugte Ausgestaltung, bei der zur Erwärmung des ersten Werkstoffs ein laser- oder plasmabasiertes oder ein auf Elektronen- oder Ionenstrahlen basierendes Verfahren eingesetzt wird. Ein eventuell noch erforderlicher zusätzlicher Energieeintrag für die Erzeugung der Schicht aus dem zweiten Werkstoffmaterial kann mit der gleichen oder einer anderen Technik erfolgen. So kann bspw. die erste Schicht mit einem laserbasierten Verfahren aufgebracht werden und der zusätzliche Energieeintrag - falls erforderlich - für die Erzeugung der zweiten Schicht mittels Plasma oder Induktion erfolgen.

Die vorgenannte Ausgestaltung ermöglicht beispielsweise die Herstellung eines Schichtverbundes bestehend aus einer metallischen Haftschicht, welche auch gleichzeitig Korrosions- und Verschleißschutz bieten kann, und einer polymeren Gleitschicht als zweite Schicht auf einem metallischen Bauteil. Insbesondere lassen sich dadurch beispielsweise die eingangs genannten PEEK-Schichten zeit- und kostengünstig über eine metallische Haft- und/oder Verschleißschutzschicht auf metallische Bauteile aufbringen.

Besonders vorteilhaft können mit dem vorgeschlagenen Verfahren rotationssymmetrische Bauteile mit einem entsprechenden Schichtverbund beschichtet werden, indem die erste Schicht mit dem EHLA-Verfahren aufgebracht wird. Durch den geringen Wärmeeintrag in das Bauteilmaterial und die große Flächenrate dieses Verfahrens ist eine kostengünstige Herstellung von High-Performance-Beschichtungen auf hochvoluminösen Bauteilen verzugsarm und ohne Änderung der Bauteileigenschaften möglich. Alternativ zum EHLA-Verfahren kann abhängig von der zu beschichtenden Bauteilgeometrie, also auch bei nicht rotationssymmetrischen Bauteilen, die erste Schicht auch mittels LMD oder PTA erzeugt werden.

Mit dem vorgeschlagenen Verfahren kann bei der Beschichtung auf einen Ofenprozess verzichtet werden, da das Bauteil nicht vollständig durchgewärmt werden muss. Dadurch ergeben sich Kosten-, Zeit- und Materialersparnisse.

Das vorgeschlagene Verfahren lässt sich vorteilhaft beispielsweise zur Herstellung von Gleitlageschichten für Windkraftkomponenten, zur Herstellung von Gleitlageschichten für hydraulische und pneumatische Pumpen, zur Herstellung von Schichtverbunden für die Chemie- und Lebensmittelindustrie, zur Beschichtung von Zahnrädern oder im Automotive-Bereich, beispielsweise bei der Beschichtung des Kolbenmantels, von Schaltventilen oder Aktoren einsetzen.

### Kurze Beschreibung der Zeichnungen

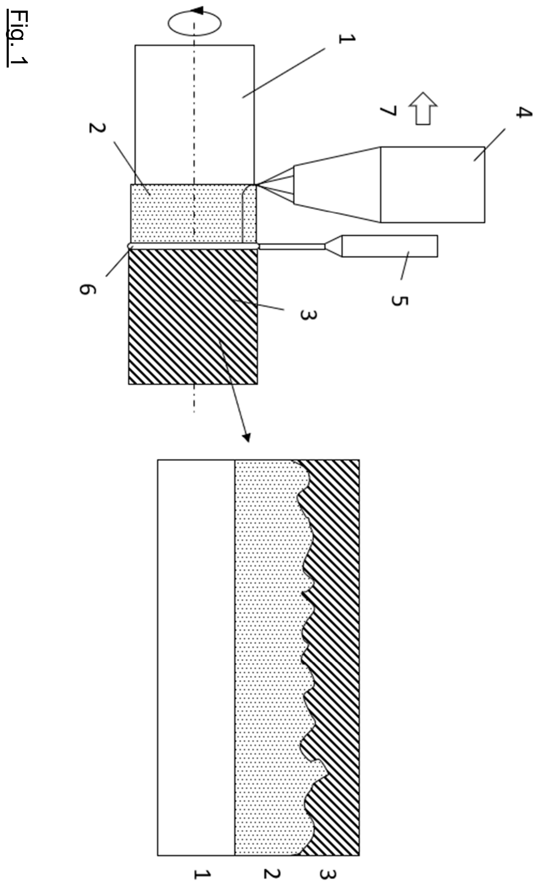

Das vorgeschlagene Verfahren wird nachfolgend anhand eines Ausführungsbeispiels in Verbindung mit der Zeichnung nochmals erläutert. Hierbei zeigt
- Fig. 1:: eine schematische Darstellung der Beschichtung eines rotationssymmetrischen Bauteils mit einem Schichtverbund aus Verschleißschutzschicht und Gleitschicht.

### Wege zur Ausführung der Erfindung

Das vorgeschlagene Verfahren lässt sich sehr vorteilhaft für das Aufbringen polymerer Gleitschichten auf metallische Bauteile einsetzen. Das nachfolgende Ausführungsbeispiel zeigt eine besonders vorteilhafte Ausgestaltung, bei der ein rotationssymmetrisches metallisches Bauteil mit einem Schichtverbund aus einer metallischen Verschleißschutzschicht, die auch als Haftschicht dient, und einer darüber liegenden polymeren Gleitschicht beschichtet wird.

In diesem Beispiel wird zum Aufbringen der metallischen Verschleißschutzschicht 2 auf ein walzenförmiges metallisches Bauteil 1 das EHLA-Verfahren eingesetzt. Dabei rotiert das Bauteil 1 um seine Symmetrieachse, wie dies in der Figur 1 angedeutet ist. Über einen Prozesskopf 4 für das EHLA-Verfahren wird während dieser Rotation die Schicht 2 aus dem Metall, im vorliegenden Beispiel Edelstahl, als Verschleißschutz auf das metallische Bauteil 1, beispielsweise aus Aluminium, aufgebracht. Der Prozesskopf 4 wird dabei in der durch den Pfeil angedeuteten Vorschubrichtung 7 bewegt. Bei dem EHLA-Verfahren wird der (erste) Werkstoff in Pulverform zugeführt und unmittelbar vor Auftreffen auf das Bauteil mit einem Laserstrahl bereits aufgeschmolzen, wie dies bspw. aus der DE 10 2011 100 456 A1 bekannt ist. Durch diese Technik des Schichtauftrags weist die aufgebrachte Verschleißschutzschicht 2 unmittelbar nach dem Schichtauftrag noch eine hohe Temperatur auf, die bei dem vorgeschlagenen Verfahren für die Beschichtung mit der polymeren Gleitschicht 3 genutzt wird. Der (zweite) Werkstoff für die Gleitschicht 3, im vorliegenden Beispiel PEEK, wird in diesem Beispiel in dispergierter Form mit einem Dispenser 5 auf die Verschleißschutzschicht 2 aufgebracht Der Dispenser 5 zum Aufbringen des dispergierten Werkstoffes 6 befindet sich hierbei in Vorschubrichtung 7 unmittelbar hinter dem Prozesskopf 4 für das EHLA-Verfahren. Durch das Aufbringen des Polymers auf die noch heiße Oberfläche der Verschleißschutzschicht 2 wird dieses unmittelbar aufgeschmolzen und bildet dadurch nach der Erstarrung die gewünschte Gleitschicht 3 aus. In diesem Beispiel ist somit kein zusätzlicher externer Wärmeeintrag für die Erzeugung der Gleitschicht 3 erforderlich.

### Bezugszeichenliste

- 1: metallisches Bauteil
- 2: Verschleißschutzschicht
- 3: Gleitschicht
- 4: Prozesskopf EHLA
- 5: Dispenser
- 6: Dispergierter Werkstoff
- 7: Vorschubrichtung

## Patentansprüche

1. Verfahren zur Beschichtung der Oberfläche oder eines Oberflächenabschnitts eines Bauteils (1), bei dem
- die Oberfläche oder der Oberflächenabschnitt des Bauteils (1) mit wenigstens einer ersten Schicht (2) aus einem ersten Werkstoff mit einem auf Energieeintrag zur Erwärmung des ersten Werkstoffs basierenden Verfahren beschichtet und
- die erste Schicht (2) mit einer zweiten Schicht (3) aus einem zweiten Werkstoff beschichtet wird, der sich vom ersten Werkstoff unterscheidet,
- wobei die Beschichtung mit der zweiten Schicht (3) wenigstens zum Teil unter Ausnutzung von Restwärme aus der ersten Schicht (2) erfolgt und/oder beeinflusst wird, die aus der Beschichtung mit der ersten Schicht (2) resultiert.

2. Verfahren nach Anspruch 1,
**dadurch gekennzeichnet,**
**dass** die Oberfläche oder der Oberflächenabschnitt des Bauteils (1) mit einer metallischen Haftschicht als erster Schicht (2) beschichtet wird.

3. Verfahren nach einem der Ansprüche 1 oder 2
**dadurch gekennzeichnet,**
**dass** der erste Werkstoff eine höhere Schmelztemperatur aufweist als der zweite Werkstoff.

4. Verfahren nach einem der Ansprüche 1 bis 3,
**dadurch gekennzeichnet,**
**dass** zur Erwärmung des ersten Werkstoffs ein laser- oder plasmabasiertes oder auf Elektronen- oder Ionenstrahlen basierendes Verfahren eingesetzt wird.

5. Verfahren nach einem der Ansprüche 1 bis 3,
**dadurch gekennzeichnet,**
**dass** die erste Schicht (2) mit der Technik des EHLA aufgebracht wird.

6. Verfahren nach einem der Ansprüche 1 bis 5,
**dadurch gekennzeichnet,**
**dass** als zweite Schicht (3) aus dem zweiten Werkstoff eine Polymerschicht, insbesondere eine polymere Gleitschicht, aufgebracht wird.

7. Verfahren nach einem der Ansprüche 1 bis 6,
**dadurch gekennzeichnet,**
**dass** der Energieeintrag zur Erwärmung des ersten Werkstoffs und ein zeitlicher Abstand zwischen diesem Energieeintrag und der Beschichtung mit der zweiten Schicht (3) aus dem zweiten Werkstoff so gewählt werden, dass für die Beschichtung mit der zweiten Schicht (3) aus dem zweiten Werkstoff kein zusätzlicher externer Wärmeeintrag erforderlich ist.

8. Verfahren nach einem der Ansprüche 1 bis 7,
**dadurch gekennzeichnet,**
**dass** die Beschichtung mit der ersten Schicht aus dem ersten Werkstoff mit einem ersten Prozesskopf (4), der in einer Vorschubrichtung (7) über die Oberfläche oder den Oberflächenabschnitt bewegt wird, und
die Beschichtung mit dem zweiten Werkstoff mit einem zweiten Prozesskopf (5) erfolgt, der in Vorschubrichtung (7) unmittelbar hinter dem ersten Prozesskopf (4) über die Oberfläche oder den Oberflächenabschnitt bewegt wird.

9. Verfahren nach einem der Ansprüche 1 bis 7,
**dadurch gekennzeichnet,**
**dass** die Beschichtung mit der ersten Schicht aus dem ersten Werkstoff mit einem ortsfesten ersten Prozesskopf (4), gegenüber dem die Oberfläche oder der Oberflächenabschnitt in einer Vorschubrichtung bewegt wird, und
die Beschichtung mit dem zweiten Werkstoff mit einem ortsfesten zweiten Prozesskopf (5) erfolgt, der in Vorschubrichtung unmittelbar vor dem ersten Prozesskopf (4) angeordnet ist.
